Europäisches Patentamt

European Patent Office

Office européen des brevets

(19)

(11) Veröffentlichungsnummer: **0 169 516**

A2

(12) # EUROPÄISCHE PATENTANMELDUNG

(21) Anmeldenummer: 85109076.1

(22) Anmeldetag: 19.07.85

(51) Int. Cl.⁴: **G 01 M 3/16**
G 01 M 3/40, G 01 M 19/00

(30) Priorität: 20.07.84 DE 3426834

(43) Veröffentlichungstag der Anmeldung:
29.01.86 Patentblatt 86/5

(84) Benannte Vertragsstaaten:
AT BE CH DE FR GB IT LI LU NL SE

(71) Anmelder: W.L. Gore & Co. GmbH
Wernher-von-Braun-Strasse 18
D-8011 Putzbrunn(DE)

(72) Erfinder: Schneider, Gerhard
Gartenweg 3
D-8836 Ellingen(DE)

(74) Vertreter: Klunker . Schmitt-Nilson . Hirsch
Winzererstrasse 106
D-8000 München 40(DE)

(54) **System zum Erkennen von Ölverschmutzung im Grundwasser.**

(57) System zum Erkennen von Ölverschmutzungen im Grundwasser, insbesondere in unmittelbarer Nähe von unterirdischen Tankanlagen, mit einem Ölfilmdetektor und einem Anzeigegerät, bei dem ein senkrechtes Drainagerohr angeordnet ist, das mit einer Vielzahl von Öffnungen in der Rohrwandung versehen ist und das von der Erdoberfläche bis über den niedrigsten möglichen Grundwasserspiegel hinaus in die Erde reicht, daß ein Ölfilmdetektor auf einem in dem Drainagerohr schwimmenden Schwimmkörper angebracht und mit dem Anzeigegerät verbunden ist.

FIG 1

W.L. Gore & Co. GmbH
Wernher-von-Braun-Str. 18
8011 Putzbrunn

20. Juli 1984
G 5559    Wa/wi

B e s c h r e i b u n g

System zum Erkennen von Ölverschmutzung im

Grundwasser

Die Erfindung bezieht sich auf ein System zum Erkennen von Ölverschmutzungen im Grundwasser, insbesondere in unmittelbarer Nähe von unterirdischen Tankanlagen, mit einem Ölfilmdetektor und einem Anzeigegerät.

Bei der unterirdischen Lagerung oder beim unterirdischen Transport von Mineralöl ist stets die Gefahr vorhanden, daß Öl durch ein unbemerktes Leck austritt und das Grundwasser verseucht. Dabei ist es besonders problematisch, daß schon geringe Mengen von Öl ausreichen, um große Grundwassermengen zu verunreinigen. Aus diesem Grund sind eine ganze Reihe von Leck-Suchvorrichtungen entwickelt worden, die die Aufgabe haben, ein Leck in einem unterirdischen Tank oder in einer unterirdisch verlegten Pipeline zu erkennen. Diese bekannten Leck-Suchvorrichtungen sind zum Teil jedoch sehr umfangreich und kompliziert und nur mit hohem Aufwand zu installieren. Darüberhinaus bereitet es teilweise erhebliche Schwierigkeiten, diese Anlagen entsprechend zu warten und bei Bedarf auszutauschen.

Es ist deshalb die Aufgabe der vorliegenden Erfindung ein System zu schaffen, mit dem Ölverschmutzungen im Grundwasser erkannt werden können und das einfach und kostengünstig in der Herstellung, Installation und Wartung ist.

Diese Aufgabe wird bei einem System gemäß dem Oberbegriff durch den kennzeichnenden Teil des Anspruchs 1 gelöst.

Die erfindungsgemäße Lösung hat eine Reihe von Vorteilen:

Die vordringlichste Aufgabe bei der Überwachung von unterirdischen Tankanlagen und Pipelines ist das Verhindern einer Verschmutzung des Grundwassers. Bei dem erfindunggemäßen System schwimmt der Ölfilmdetektor auf dem Grundwasserspiegel. Bei einer Verschmutzung des Grundwassers durch auslaufendes Öl bildet sich auf dem Grundwasser ein Ölfilm, der von dem Ölfilmdetektor erkannt und über eine entsprechende Verbindung an das Anzeigegerät weitergemeldet wird. Dadurch wird jede Verschmutzung des Grundwassers in der Nähe der Tankanlage oder der Pipeline zuverlässig erkannt.

Das erfindungsgemäße System ist sehr einfach zu installieren. Das Drainagerohr muß lediglich mit Hilfe einer entsprechenden Bohrung in die Erde eingebracht werden und kann dann sofort mit dem Ölfilmdetektor versehen werden, der dann an das Anzeigegerät angeschlossen wird. Das System kann somit auch nachträglich, d.h. auch nach der Verlegung der Tankanlagen bzw. der Pipeline ohne Probleme installiert werden.

Ein weiterer Vorteil ist in der Tatsache zu sehen, daß bei der Verwendung dieses Systems keine speziellen Anforderungen an die Tankanlage bzw. an die Pipeline gestellt wird. Das System ist bei jeder Art und bei jedem Aufbau von Tankanlagen einsetzbar.

Ein weiterer Vorteil des Systems ist sein einfacher Aufbau und die einfache Überprüfungs- und Wartungsmöglichkeit. Der Ölfilmdetektor kann jederzeit und ohne Schwierigkeit aus dem Drainagerohr entnommen und entsprechend überprüft werden. Bei einem Defekt des Detektors kann dieser ohne weiteres repariert bzw. ausgetauscht werden.

Da das System sehr preisgünstig ist, kann eine größere Tankanlage durch eine Vielzahl von solchen Einzelsystemen überwacht werden. Man wird dann die Signale der einzelnen Detektoren zu einem gemeinsamen Anzeigegerät führen, das mit entsprechenden Alarmeinrichtungen ausgestattet sein sollte.

Die Verbindung des schwimmenden Ölfilmdetektors mit der Erdoberfläche kann auf einfache Weise durch ein Spiralkabel erfolgen. Dadurch kann sich der schwimmende Detektor leicht dem unterschiedlichen Niveau des Grundwassers anpassen. Es sind jedoch auch andere Verbindungssysteme zwischen dem Ölfilmdetektor und dem Anzeigegerät einsetzbar.

Die Tiefe des Drainagerohres muß dem Niveau des Grundwasserspiegels angepaßt werden. Dabei ist es besonders zweckmäßig, den Fuß des Drainagerohres zwei bis drei Meter unter den Grundwasserspiegel reichen zu lassen.

Weitere Vorteile, Merkmale und Anwendungsmöglichkeiten ergeben sich aus der nachfolgenden Beschreibung in Verbindung mit den Figuren. Darin zeigen:

Fig. 1   eine unterirdische Tankanlage mit zwei erfindungsgemäßen Systemen zum Erkennen von Ölverschmutzungen im Grundwasser

Fig. 2   eine Draufsicht auf die Anordnung gem. Fig. 1

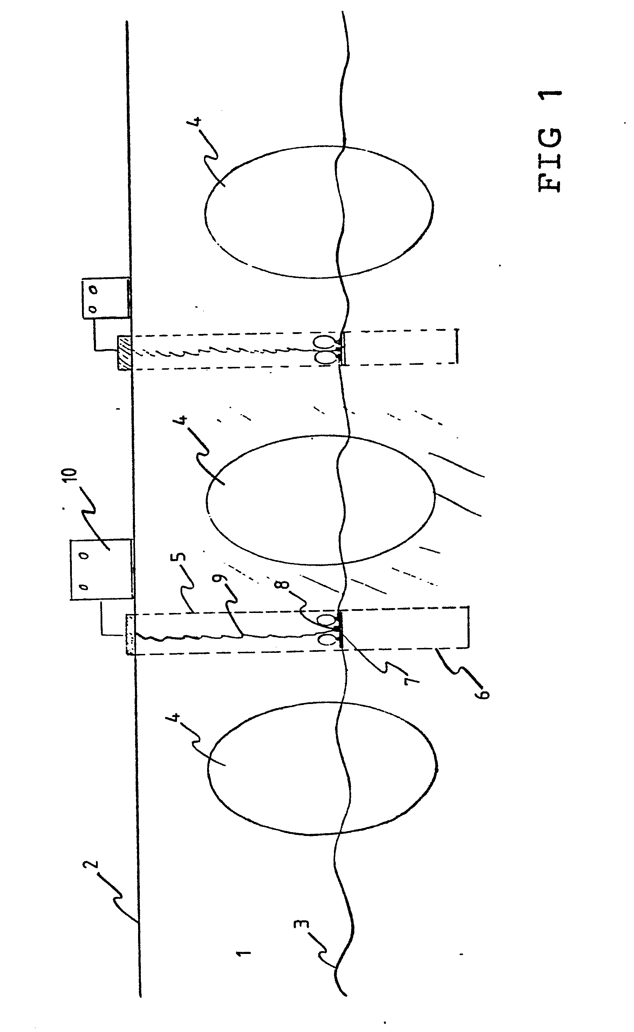

Fig. 1 zeigt ein Ausführungsbeispiel des erfindungsgemäßen Systems, bei dem zwei Systeme zur Überwachung einer Tankanlage mit drei unterirdischen Tanks eingesetzt wird.

In dem Erdreich 1 mit der Erdoberfläche 2 und dem Grundwasserspiegel 3 sind drei Öltanks 4 eingelassen. Von der Erdoberfläche 2 aus erstrecken sich zwei Drainagerohre 5 bis unterhalb des Niveaus des Grundwasserspiegels 3. Die Drainagerohre weisen seitliche Öffnungen 6 auf, durch die das Grundwasser in das Drainagerohr eindringen und sich dort sammeln kann. In dem Drainagerohr ist eine Schwimmerplattform 7 angeordnet, auf der der Ölfilmdetektor 8 vorgesehen ist. Dieser Ölfilmdetektor kann in an sich bekannter Weise als Widerstandsdetektor ausgebildet sein. Dabei wird der elektrische Widerstand an der Wasseroberfläche zwischen zwei Fühlern gemessen. Sobald ein Ölfilm an der Wasseroberfläche auftritt, verändert sich der Widerstand, da Mineralöl nicht elektrisch leitend ist. Der Ölfilmdetektor 8 ist mittels eines Spiralkabels 9 mit dem Anzeigegerät 10 verbunden. Dieses Anzeigegerät kann mit Alarmeinrichtungen ausgestattet werden. In der Fig. 1 ist für jedes System ein eigenes Anzeigegerät vorgesehen. Es ist jedoch auch möglich, das Signal der Ölfilmdetektoren zu einem gemeinsamen Anzeigegerät zu führen. In diesem Falle sollte natürlich zweckmäßigerweise dafür gesorgt werden, daß erkannt wird, welches der Systeme den Alarm ausgelöst hat.

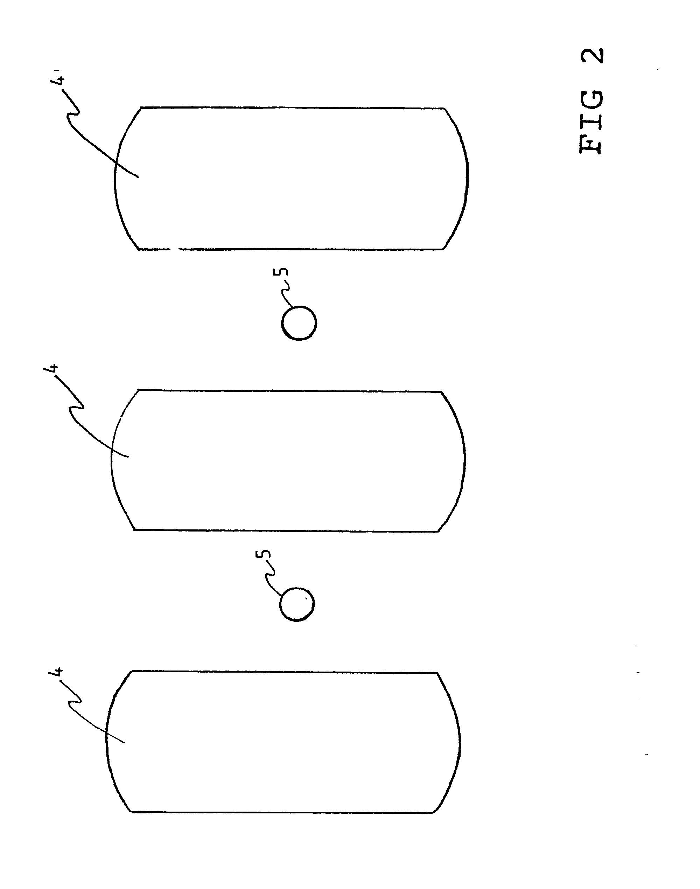

Die Fig. 2 zeigt eine Draufsicht auf das Ausführungsbeispiel gemäß der Fig. 1. Wie aus der Figur zu erkennen ist, ist es bei zweckmäßiger Anordnung des erfindungsgemäßen Systems möglich, eine größere Öltankanlage mit einer relativ geringen Zahl von Überwachungssystemen zu kontrollieren. Es ist jedoch auch umgekehrt möglich, wenn in Folge der besonderen Gefährdung des Grundwassers an dieser Stelle, z. B. in der Nähe einer Trinkwasser-Entnahmestelle, eine besonders sorgfältige Überwachung des Grundwassers erforderlich ist, ein redundantes Überwachungssystem mit mehreren (mindestens 3) einzelnen Systemen aufzubauen.

A n s p r ü c h e

1. System zum Erkennen von Ölverschmutzungen im Grundwasser, insbesondere in unmittelbarer Nähe von unterirdischen Tankanlagen, mit einem Ölfilmdetektor und einem Anzeigegerät, d a d u r c h  g e k e n n z e i c h n e t, daß ein senkrechtes Drainagerohr (5) angeordnet ist, das mit einer Vielzahl von Öffnungen (6) in der Rohrwandung versehen ist und daß von der Erdoberfläche (2) bis über den niedrigsten möglichen Grundwasserspiegel (3) hinaus in die Erde reicht, daß ein Ölfilmdetektor (8) auf einem in dem Drainagerohr (5) schwimmenden Schwimmkörper (7) angebracht     und mit dem Anzeigegerät (10) verbunden ist.

2. System zum Erkennen von Ölverschmutzungen im Grundwasser gemäß Anspruch 1, dadurch gekennzeichnet, daß die Verbindung zwischen dem Ölfilmdetektor (8) und dem Anzeigegerät (10) durch ein Spiralkabel (9) erfolgt.

FIG 1

0169516

FIG 2